# EUROPÄISCHE PATENTSCHRIFT

(11) **EP 0 613 983 B1**
(45) Veröffentlichungstag und Bekanntmachung des Hinweises auf die Patenterteilung: **30.10.1996**
(21) Anmeldenummer: 94102518.1
(22) Anmeldetag: 19.02.1994
(51) Int. Cl.: E02F 5/00, E02F 3/94

(54) **Saugbagger**
Suction dredge
Drague suceuse

(30) Priorität: 27.02.1993 DE 4306135
(43) Veröffentlichungstag der Anmeldung: 07.09.1994
(73) Patentinhaber: VMB VESTA MASCHINENBAU GMBH & CO. KG, D-76287 Rheinstetten (DE)
(72) Erfinder: Rinker, Karl, Dipl.-Ing., D-76669 Bad Schönborn (DE)
(74) Vertreter: Lasch, Hartmut Dipl.-Ing.

(56) Entgegenhaltungen:
- EP-A- 0 368 129
- DE-A- 3 227 340
- US-A- 5 016 717
- PATENT ABSTRACTS OF JAPAN vol. 8, no. 76 (M-288) (1513) 9. April 1984 & JP-A-58 222 223 (HATSUKOO K.K.) 23. Dezember 1983
- PATENT ABSTRACTS OF JAPAN vol. 8, no. 76 (M-288) (1513) 9. April 1984 & JP-A-58 222 225 (HATSUKOO K.K.) 23. Dezember 1983
- PATENT ABSTRACTS OF JAPAN vol. 8, no. 76 (M-288) (1513) 9. April 1984 & JP-A-58 222 231 (HATSUKOO K.K.) 23. Dezember 1983

## Beschreibung

Die Erfingung betrifft einen Bagger zum gezielten Aufnehmen von Sauggut, insbesondere zum Ausheben von Erdreich an erdverlegten Leitungen, mit
einem pneumatischen Saugrüssel zum Aufnehmen des Saugguts,
einem Sammelbehälter für das aufgesaugte Sauggut, in den der Saugrüssel mündet und in dem das Sauggut aus dem Saugluftstrom abgeschieden wird, einem an den Sammelbehälter angeschlossenen Sauggebläse und
einer zwischen der Mündung des Saugrüssels in den Sammelbehälter und dem Sauggebläse angeordneten Filtervorrichtung, die ein Feinfilter umfaßt. Ein derartiger Bagger ist aus Patent Abstracts of Japan, Vol. 8, Number 76 (M-288) (1513), April 9, 1984 bekannt.

Bei Arbeiten an bereits verlegten Leitungen werden im Rohrleitungsbau üblicherweise herkömmliche Schaufelbagger eingesetzt. Das Arbeiten mit Schaufelbaggern ist besonders dann von Nachteil, wenn es darum geht eine bestimmte Stelle an erdverlegten Rohrleitungen freizulegen, um beispielsweise Rohrbrüche zu beheben, Abzweigleitungen anzuschließen oder die Leitungen auch nur zu inspizieren. Aufgrund der Arbeitsweise eines Schaufelbaggers muß das Erdreich in einem größeren Bereich abgetragen und der Abraum an der Baustelle abgelegt werden. Aufgrund der relativ groben Arbeitsweise und schlechten Steuerbarkeit der Schaufel besteht eine erhebliche Gefahr der Beschädigung der freizulegenden oder davon benachbarter Leitungen. Bei medienführenden Leitungen wie Gas-, Wasser- oder Abwasserrohrleitungen, kann dies zum Austreten des Mediums, bei elektrischen Kabeln zu deren Zerstörung führen.

Zum gezielten Aufnehmen von Sauggut sind aus diesem Grunde sogenannte Saugbagger entwickelt worden, bei denen mit Hilfe eines Gebläses ein Unterdruck erzeugt und das Sauggut über einen Saugrüssel in einen Sammelbehälter gesaugt werden kann. Dort wird das Sauggut aus dem Saugluftstrom abgeschieden, während noch in der Transportluft vorhandener Staub oder sonstige Teilchen ausgefiltert werden, bevor die Transportluft an der Austrittseite des Gebläses abgeblasen wird. Es hat sich gezeigt, daß die Filter bei derartigen Saugbaggern relativ schnell durch den Saugluftstrom mitgeführte Teilchen zugesetzt werden, wodurch der Saugvorgang behindert oder gar verhindert wird.

Es ist bekannt (EP 0 368 129 C2), die Filter durch Aufgabe von Wasser und/oder Luft kontinuierlich abzureinigen, jedoch ist die damit zu erzielende Reinigungsleistung abhängig von der Art der im Saugluftstrom mitgeführten Teilchen. Insbesondere bei Lehm oder sonstigen, stark anhaftenden Teilchen, ist es sehr schwierig, die Filter über längere Zeit frei zu halten und somit einen relativ lang andauernden störungsfreien Betrieb des Saugbaggers zu gewährleisten.

Der Erfindung liegt die Aufgabe zugrunde, einen Bagger zum gezielten Aufnehmen von Sauggut, insbesondere zum Ausheben von Erdreich zu schaffen, bei dem über eine lange Zeitspanne eine gute Abscheidung des aufgesaugten Sauggutes gewährleistet ist.

Diese Aufgabe wird erfindungsgemäß durch die Merkmale des Anspruchs 1 gelöst. Nachdem der Saugluftstrom zusammen mit dem mitgeführten Sauggut über den Saugrüssel in den Sammelbehälter eingetreten ist, findet dort aufgrund der Schwerkraft eine erste Vorabscheidung statt. Die sich anschließend noch im Saugluftstrom befindlichen Teilchen werden von der Transportluft in den das Grobfliter bildenden labyrinthförmigen Strömungskanal mitgerissen, in dem der Saugluftstrom mehrfach stark umgelenkt wird. Die mitgeführten Teilchen besitzen aufgrund ihrer gegenüber der Transportluft größeren Masse ein stärkeres Trägheits bzw. Beharrungsvermögen, so daß sie dem Umlenkungen des Saugluftstroms nicht oder nur im geringen Maße folgen können. Die Teilchen prallen aus diesem Grunde gegen die Seiten bzw. Trennwände und fallen von diesen auf den Boden des Sammelbehälters, so daß sie aus dem Saugluftstrom abgeschieden sind. Auf diese Weise können durch das Grobfilter bereits wesentliche Anteile des Sauggutes aus dem Saugluftstrom entfernt werden. Diejenigen Teilchen, die aufgrund ihrer relativ geringen Masse den Umlenkungen in dem labyrinthförmigen Strömungskanal folgen können, werden in dem nachgeschalteten Feinfilter zurückgehalten, aus dem sie in herkömmlicher Weise mittels Luft und/oder Wasser abgereinigt werden können.

Dabei ist vorgesehen, daß der Querschnitt des Strömungskanals in Strömungsrichtung zunimmt. Auf diese Weise kann erreicht werden, daß die Luftgeschwindigkeit im Strömungskanal zunehmend kleiner wird und die im Luftstrom mitgerissenen Sauggutbestandteile sich an den Trennwänden absetzen und nach unten abfallen können. Es ist vorgesehen, daß die Trennwände mit unterschiedlichem Abstand zueinander angeordnet sind, so daß der Strömungsquerschnitt abschnittsweise zunimmt.

Eine bevorzugte Ausführungsform zeichnet sich dadurch aus, daß die Trennwände im wesentlichen vertikal sowie parallel zueinander angeordnet sind. Auf diese Weise ist es möglich, auf einem relativ geringen Bauraum innerhalb des Sammelbehälters eine vielfache Umlenkung des Strömungskanals zu erzielen.

In vorteilhafter Ausgestaltung der Erfindung ist vorgesehen, daß die Umlenkungen des Strömungskanals abwechselnd nahe der oberen Wand bzw. nahe dem Boden des Sammelbehälters erfolgen. Auf diese Weise wird der Saugluftstrom innerhalb des Grobfilters in im wesentlichen vertikaler Richtung auf- und abgeführt, so daß die Schwerkraft die Abscheidung der mitgeführten Teilchen unterstützt. Der Einlaß des Strömungskanals ist vorzugsweise nahe der oberen Wand des Sammelbehälters angeordnet, so daß bereits zwischen der Mündung des Saugrüssels in den Sammelbehälter und dem Eintritt in den Strömungskanal eine wirkungsvolle Vorabscheidung stattfinden kann.

Die Anzahl der Umlenkungen des Strömungskanals hängt wesentlich von dem Einsatzgebiet des Saugbaggers ab. Es hat sich jedoch gezeigt, daß der Saugluftstrom zumindest dreimal um 180° umgelenkt werden sollte, um für Erdreich eine hohe Abscheideleistung zu erzielen.

Der Feinfilter ist vorzugsweise von mehreren durchströmten Filtersäcken gebildet. Filtersäcke bzw. -tüten sind an sich bekannt und haben sich zur Abscheidung bzw. Rückhaltung von Staub oder staubähnlichen Teilchen bewährt. Um die Reinigung der Filtersäcke zu erleichtern, ist vorzugsweise vorgesehen, daß die Filtersäcke im wesentlichen vertikal ausgerichtet und von unten nach oben durchströmt sind. Die an den Filtersäcken zurückgehaltenen Teilchen können somit, wenn sie sich aus den Filtersäcken lösen, nach unten auf den Boden des Sammelbehälters fallen. Darüberhinaus ist mit einer derartigen Anordnung der weitere Vorteil verbunden, daß eine einfache Abreinigung der Filtersäcke möglich ist. Zu diesem Zweck ist vorgesehen, daß die Filtersäcke an ihrem oberen Ende mit Luft- und/oder Wasserdüsen versehen sind, mittels der die Filtersäcke unter Druck ausblasbar bzw. ausspülbar sind. Mittels der Düsen können die Filtersäcke kontinuierlich oder intervallartig abgereinigt werden, wobei die zurückgehaltenen Teilchen nach Lösen aus den Filtersäcken auf den Boden des Sammelbehälters fallen.

Zur Verbesserung der Reinigungsmöglichkeiten der Filtersäcke kann vorgesehen sein, daß diese an einem schwimmend gelagerten Tragrahmen angebracht sind. Wenn der Tragrahmen mittels einer Vibrationsvorrichtung, beispielsweise einer rotierenden Nockenscheibe oder eines Unwuchtmotors in Schwingungen versetzt wird, können die Filtersäcke zusätzlich ausgeschüttelt werden, wodurch ein Verkleben der Filterwände mit Sauggut verhindert ist. Die schwimmende Lagerung des Tragrahmens kann beispielsweise über eine Federaufhängung oder eine entsprechende Lagerung erreicht werden. Die Filtersäcke können am Tragrahmen hängend auch als Einheit zum Zwecke einer externen Reinigung entnommen oder ausgetauscht werden.

Die Teilchen, die in der vorabscheidung, in dem labyrinthförmigen Strömungskanal und den Filtersäcken zurückgehalten wurden, gelangen auf den Boden des Sammelbehälters. Auf diese Weise füllt sich der Sammelbehälter relativ schnell, wenn er nicht mit einem ausreichend großen Volumen ausgestattet ist. Um auch bei relativ kleinen und kompakten Sammelbehältern einen kontinuierlichen Betrieb des Saugbaggers über einen möglichst langen Zeitraum zu gewährleisten, ist erfindungsgemäß vorgesehen, daß am Boden des Sammelbehälters eine Fördervorrichtung vorgesehen ist, mittels der das aus dem Luftstrom abgeschiedene Sauggut aus dem Sammelbehälter abführbar ist. Der Sammelbehälter kann auf diese Weise intervallartig oder kontinuierlich entleert werden, so daß der Betrieb des Saugbaggers durch das Volumen des Sammelbehälters nicht beschränkt ist. Vorzugsweise ist die Fördervorrichtung von einer Förderschnecke gebildet, die beispielsweise in Längsrichtung des Baggers verläuft.

Um das abgeschiedene Sauggut in einfacher Weise aus dem Sammelbehälter entfernen zu können, ist in bevorzugter Ausgestaltung der Erfindung dem förderseitigen Ende der Förderschnecke eine Öffnung im Boden des Sammelbehälters zugeordnet, durch die das abgeschiedene Sauggut auf eine daruterliegende Transportvorrichtung fällt. Die Öffnung ist vorzugsweise nahe dem hinteren Ende des Sammelbehälters angeordnet, so daß die Fördervorrichtung das abgeschiedene Sauggut über den gesamten Boden des Sammelbehälters kontinuierlich fördern kann. Die Öffnung ist vorzugsweise mittels eines Deckels oder eines Schiebers verschließbar, so daß das Sauggut bei Bedarf auch im Sammelbehälter zurückwerden kann.

Als Transportvorrichtung hat sich ein Förderband bewährt, das eine kontinuierliche Abführung des Saugguts ermöglicht. Um das Saug- bzw. Fördergut je nach Bedarf auf verschiedenen Seiten des Baggers auf dem Erdboden abzulagern kann vorgesehen sein, daß das Förderband schwenkbar an dem Chassis des Baggers angebracht ist. In jeder Schwenkstellung bleibt dabei ein Abschnitt des Förderbandes unterhalb der Öffnung im Boden des Sammelbehälters angeordnet, so daß das durch die Öffnung hindurchfallende Sauggut zuverlässig auf das Förderband gelangt. Es hat sich als sinnvoll erwiesen, wenn das schwenkbare Förderband einen Schwenkbereich von etwa 180° überstreicht, so daß das Sauggut entweder neben oder hinter dem Bagger abgeladen werden kann.

Alternativ ist es auch möglich, daß das Förderband als stationäres Förderband ausgebildet ist, wobei in bevorzugter Ausgestaltung am freien Ende dieses ersten Förderbandes ein weiters zweites Förderband angeordnet und das Saug- bzw. Fördergut von dem ersten Förderband auf das zweite Förderband übergebbar ist. Bei einer derartigen Ausgestaltung kann dann das zweite Förderband schwenkbar an dem Chassis des Baggers angebracht sein, so daß das Saug- bzw. Fördergut je nach Bedart auf verschiedenen Seiten des Baggers abgeladen werden kann.

Um zu verhindern, daß das zweite Förderband beim Verfahren des Baggers von dem Chassis übermäßig weit vorsteht, ist vorzugsweise vorgesehen, daß das Förderband relativ zum Chassis verschiebbar ist. Auf diese Weise kann das Förderband in eine auf dem Chassis aufgelagerte Ruhestellung verschoben werden, in der es sicher gehalten ist und von dem Saugbagger nicht vorsteht.

Es ist zwar grundsätzlich möglich, daß der Saugluftstrom von der Mündung des Saugrüssels in den Sammelbehälter unmittelbar in den labyrinthartigen Strömungskanal eingeleitet wird, jedoch hat es sich bewährt, daß vor dem Eintritt in den Strömungskanal zuerst ein Absetzraum des Sammelbehälters durchströmt wird, indem die Vorabscheidung stattfindet. Der Absetzraum sollte der Filtervorrichtung vorgeschaltet sein. Je nach Art des Sauggutes kann mittels der Vorabscheidung bereits ein hoher Anteil der im Saugluftstrom mitgführten Teilchen im Absetzraum abgeschieden werden. Die Kapazität des Absetzraumes bestimmt somit im wesentlichen die Dauer des kontinuierlichen Betriebes des Saugbaggers. In bevorzugter Ausgestaltung der Erfindung ist vorgesehen, daß der Absetzraum mittels einer Trennwand in zwei Behälterabschnitte unterteilt ist und daß Strömungsleitvorrichtungen vorgesehen sind, mittels der der durch die Mündung des Saugrüssels in den Sammelbehälter eintretende Saugluftstrom wahlweise in einen der beiden Behälterabschnitte einleitbar ist. Als Strömungsleitvorrichtungen finden dabei vorzugsweise schwenkbar gelagerte Klappen oder ähnliches Verwendung. Wenn bei dieser Ausgestaltung der eine Behälterabschnitt von dem Saugluftstrom durchströmt ist und durch die Abscheidung der Teilchen allmählich gefüllt wird, kann der andere Behälterabschnitt geleert werden. Wenn der eine Behälterabschnitt dann gefüllt ist, kann durch Umlegen der Strömungsleitvorrichtungen der Saugluftstrom durch den nunmehr leeren Behälterabschnitt geleitet werden, während der gefüllte Behälterabschnitt geleert wird. Durch dieses Wechselspiel zwischen Auffüllen und Leeren der einzelnen Behälterabschnitte kann ein kontinuierlicher Betrieb des Saugbaggers ermöglicht werden. Dabei ergibt sich eine konstruktiv einfache Möglichkeit des Entleerens der einzelnen Behälterabschnitte, wenn jeder Behälterabschnitt an seinem unteren Ende eine verschließbare Öffnung aufweist, durch die das abgeschiedene Sauggut auf eine darunterliegende Transportvorrichtung fällt.

Auch bei dieser Ausgestaltung hat es sich bewährt, als Transportvorrichtung ein Förderband zu verwenden, das gegebenenfalls schwenkbar an dem Chassis des Baggers angebracht und/oder relativ zu diesem verschiebbar sein kann.

Nachstehend ist die Erfindung anhand von in der Zeichnung wiedergegebenen Ausführungsbeispielen beschrieben. In der Zeichnung zeigen:
- Figur 1:: einen schematischen Schnitt einer Ausführungsform des Baggers,
- Figur 2:: eine Ansicht sowie Aufsicht auf das Feinfilter und
- Figur 3:: einen schematischen Schnitt einer weiteren Ausführungsform des Baggers.

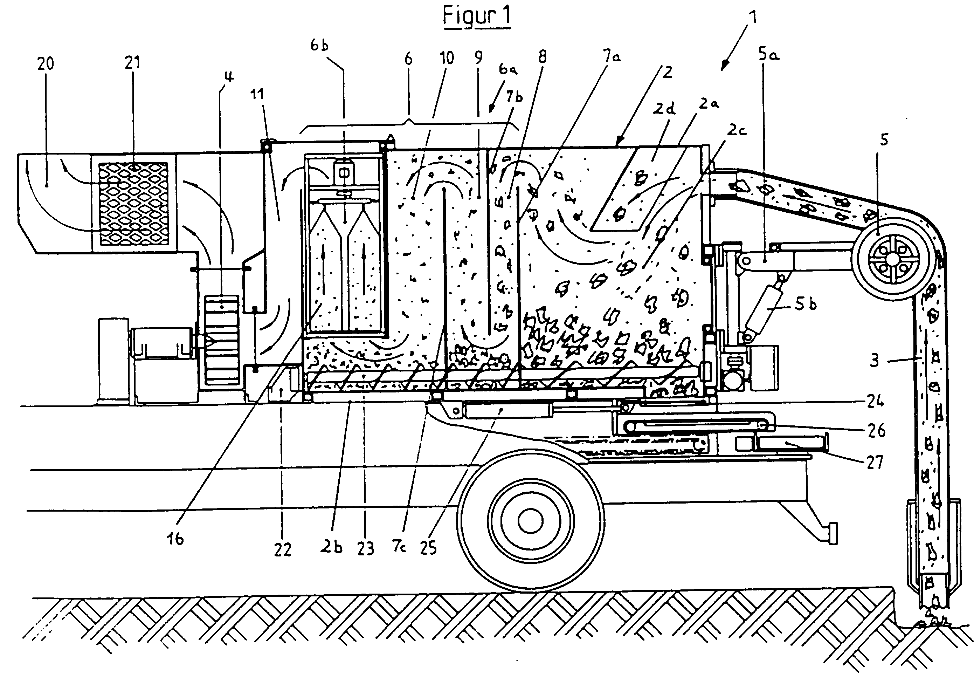

Der in Figur 1 dargestellte Bagger weist ein Fahrgestell auf, auf dem ein Sammelbehälter 2 mit heckseitig angeschlossenem Saugrüssel 3 und ein Sauggebläse 4 angeordnet sind. Das Sauggebläse 4 ist über eine Leitung 11 im oberen Bereich des Sammelbehälters 2 angeschlossen und fördert die Luft über einen Ausblaskasten 20, in den ein Schalldämpfer 21 eingebaut ist, in die Atmosphäre.

An der dem Anschluß der Leitung 11 gegenüberliegdenden, oberen Ende des Sammelbehälters 2 mündet der Saugrüssel 3 in den Sammelbehälter 2. Der Saugrüssel 3 besteht aus einem flexiblen, ausgesteiften Material und ist über eine Schlauchrolle 5 nach unten geführt. An seinem unteren Ende weist der Saugrüssel 3 ein nicht näher bezeichnetes Aufbrechwerkzeug auf, das von einem Schutzkorb umgeben ist.

Die Schlauchrolle 5 ist an dem freien Ende eines Auslegers 5a drehbar gelagert. Der Ausleger 5a ist mittels eines Hubzylinders 5b um eine horizontale Querachse an einer Säule heb-und senkbar. Die Säule ist darüberhinaus um eine vertikale Achse mittels eines Schwenkmotors drehbar. Auf diese Weise kann der Saugrüssel bzw. das Aufbrechwerkzeug verschiedene Positionen relativ zu dem Sammelbehälter 2 einnehmen.

Das von dem Aufbrechwerkzeug gelöste Erdreich wird mittels des über das Sauggebläse 4 im Sammelbehälter 2 und im Saugrüssel 3 erzeugten Unterdrucks angesaugt und in einen Absetzraum 2c des Sammelbehälters 2 transportiert. Innerhalb des Absetzraums 2c ist unmittelbar hinter der Einmündung des Saugrüssels 3 eine als Abscheider wirkende Schürze 2d angeordnet, die die Transportluft und das von ihr transportierte Material nach unten ablenkt. Ein großer Teil des im Saugluftstrom mitgeführten Sauggutes wird somit im Absetzraum 2c abgeschrieden.

Der Absetzraum 2c ist auf seiner gemäß Figur 1 linken Seite durch eine Trennwand 7a begrenzt, die in ihrem oberen Bereich nahe der oberen Wand 2a des Sammelbehälters 2 einen Einlaß in einen labyrinthförmigen Strömungskanal bildet, der von mehreren vertikalen sowie parallel und versetzt zueinander angeordneten Trennwänden 7a, 7b, und 7c gebildet ist. Der Saugluftstrom wird zwischen den Wänden 7a und 7b von der oberen Wand 2a des Sammelbehälters 2 nach unten in die Nähe des Bodens 2b des Sammelbehälters geführt, wo er in den zwischen den Trennwänden 7b und 7c gebildeten Zwischenraum eintreten kann. In diesem Zwischenraum strömt der Saugluftstrom wieder vertikal nach oben bis in die Nähe der oberen Wand 2a des Sammelbehälters 2 und wird an dieser nochmals nach unten abgelenkt, bevor er nahe dem Boden 2b des Sammelbehälters in ein Feinfilter 6b eintritt. Die zwischen den Trennwänden 7a, 7b und 7c gebildeten Strömungskanalabschnitte 8, 9 und 10 bilden somit ein Grobfilter 6a, in dem die noch im Saugluftstrom mitgeführten Teilchen größerer Masse abgeschieden werden. Der Querschnitt der Strömungskanalabschnitte 8,9 und 10 nimmt in Strömungsrichtung zu, wodurch die Strömungsgeschwindigkeit abnimmt.

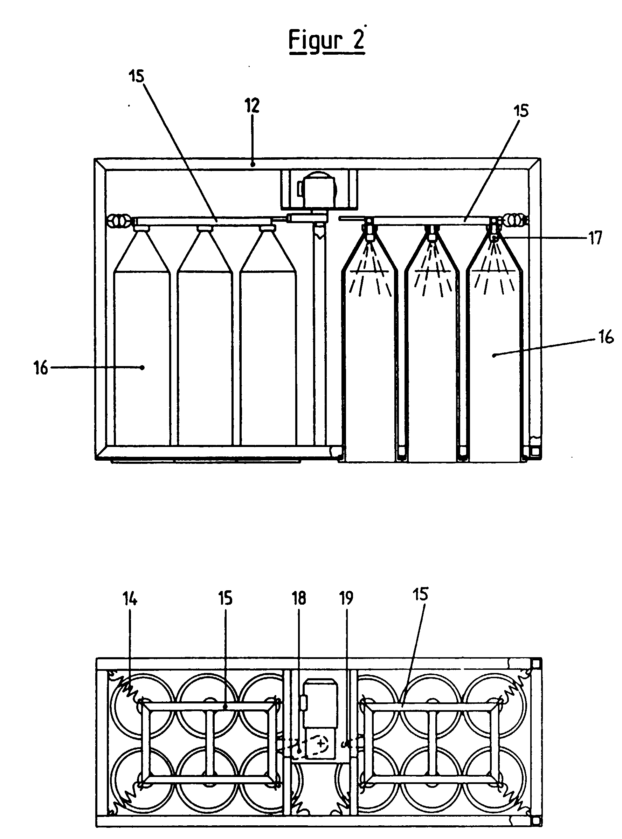

Das Feinfilter 6b umfaßt mehrere vertikal angeordnete, von unten nach oben durchströmte Filtersäcke 16, die an ihren jeweiligen oberen Enden an einem Tragrahmen 15 gehalten sind (Figur 2). Der Tragrahmen 15 ist über Federn 14 an einem feststehenden Rahmen 12 schwimmend gelagert und kann mit Hilfe einer drehangetriebenen Nockenscheibe 18 über Nocken 19 in Vibration versetzt werden. Auf diese Weise können die Filtersäcke 16 ausgeschüttelt werden, um ein Verkleben der Filterwände mit Sauggut zu verhindern.

Im oberen Abschnitt jedes Filtersacks 16 sind darüber hinaus Wasser- und/oder Luftdüsen 17 angeordnet mittels der die Filtersäcke unter Druck ausspülbar bzw. ausblasbar sind.

Die aus dem Feinfilter 6b austretende, von Teilchen gereinigte Luft wird über den Raum 11 von dem Sauggebläse 4 angesaugt und über den Ausblaskasten 20 an die Umgebungsluft abgegeben.

Am Boden des Sammelbehälters 2, d.h. des Absetzraumes 2c, des Grobfilters 6a sowie unterhalb des Feinfilters 6b ist eine Förderschnecke 23 angeordnet, die durch einen Motor drehangetrieben ist. Die Förderschnecke 23 fördert das sich am Boden absetzende abgeschiedene Sauggut zu einer an heckseitigen Ende des Sammelbahälters ausgebildeten Öffnung 24, die mit Hilfe eines Hydraulikzylinders 25 geöffnet und verschlossen werden kann. Unterhalb der Öffnung 24 ist ein erstes Förderband 26 angeordnet, das das aus der Öffnung 24 herausfallende Sauggut aufnimmt und zum heckseitigen Ende des Fahrzeugrahmens befördert, an dem es auf ein zweites Förderband 27 übergeben wird. Das zweite Förderband 27 ist am Fahrzeugrahmen dreh- und verschiebbar gelagert, so daß das auf das Förderband aufgebrachte Sauggut wahlweise nach hinten oder zur rechten oder linken Fahrzeugseite befördert werden kann. Die Entleerung des Förderbandes 27 kann bei Bedarf auch in bereitgestellte Transportmulden, auf ein Rüttelsieb oder entlang der Baustelle zu einer Weiterverarbeitungsstation erfolgen.

Das Förderband 27 ist relativ zum Fahrzeugrahmen in Längs- und Querrichtung verschiebbar, so daß es in eine in Figur 1 gestrichelt dargestellte Lagerposition gebracht werden kann.

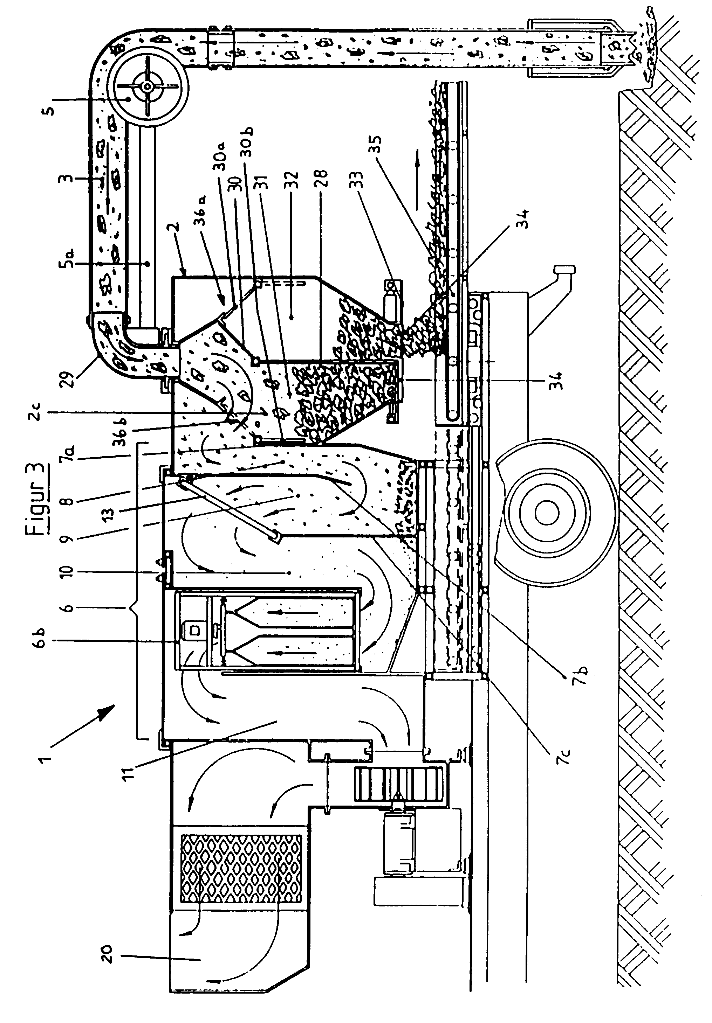

Gemäß der in Figur 3 gezeigten Ausführungsform ist der Saugrüssel 3 über einen drehbaren Saugstutzen 29 an der Oberseite des Sammelbehälters 2 angeschlossen. Unmittelbar an die Mündung des Saugrüssels schließt sich innerhalb des Sammelbehäiters 2 ein trichterförmiges Leitblech an, das in zwei Durchgangsöffnungen endet, die mittels einer als Strömungsleitvorrichtung dienenden Klappe 30 alternativ verschließbar sind. Der Absetzraum 2c ist mittels einer Trennwand 28 in zwei behälterförmige Abschnitte unterteilt, wobei die Klappe 30 das durch den Saugrüssel 3 in den Sammelbehälter 2 gelangende Sauggut wahlweise einem der beiden Abschnitte 31 bzw. 32 zuleitet. Im oberen Bereich der beiden Behälterabschnitte 31 und 32 ist jeweils eine Auslaßöffnung 36a bzw. 36b vorgesehen, die mit einer schwenkbaren Klappe 30a bzw. 30b verschließbar sind und in ihrem geöffneten Zustand dem Saugluftstrom das Eintreten in den labyrinthförmigen Strömungskanal 8,9 und 10 ermöglichen, der den aus Figur 1 bekannten Aufbau aufweist. Zusätzlich ist in dem Strömungskanal ein Filtersieb 13 angeordnet, wodurch die Filterieistung erhöht ist. Nach Durchströmen des labyrinthförmigen Strömungskanals 8, 9 und 10 tritt der Saugluftstrom in zuvor geschilderter Weise in das Feinfilter 6b ein, in dem er von feinsten mitgeführten Teilchen gereinigt wird. Über den Raum 11 und den Ausblaskasten 20 tritt die Luft an die ungebende Atmosphäre aus.

Die beiden Behälterabschnitte 31 und 32 weisen an ihrem unteren Ende jeweils eine verschließbare Öffnung 34 auf, durch die das in dem jeweiligen Behälterabschnitt angesammelte Sauggut auf ein darunterliegendes Förderband 35 abgegeben werden kann. Das Förderband 35 ist drehbar und längs sowie quer verschiebbar an dem Fahrzeugträger angeordnet und dient dem Abtransport des abgeschiedenen Sauggutes auf die linke oder rechte Seite des Fahrzeugs

Wenn bei Betrieb des Saugbaggers der eine Behälterabschnitt 31 mit abgeschiedenem Sauggut gefüllt ist, wird die Klappe 30 umgelegt, wodurch der Saugluftstrom in den anderen Behälterabschnitt 32 geleitet wird. Während sich im Laufe der Zeit in dem nunmehr in Gebrauch befindlichen Behälterabschnitt 32 das Sauggut ansammelt, kann der andere, gefüllte Behälterabschnitt 31 durch Öffnen der Öffnung 34 entleert werden, da das Sauggut auf das unterhalb angeordnete Transportband 35 fällt. Wenn der Abschnitt 32 mit Sauggut gefüllt ist, wird die Klappe 30 wiederum umgelegt, wodurch der Saugluftstrom dem anderen Behälter zugeführt wird. Aufgrund dieses kontinuierlichen Wechselspiels zwischen Auffüllen und Entleeren der einzelnen Behälterabschnitte ist ein kontinuierlicher Betrieb des Saugbaggers möglich.

## Patentansprüche

1. Bagger zum gezielten Aufnehmen von Sauggut, insbesondere zum Ausheben von Erdreich an erdverlegten Leitungen, mit
einem pneumatischen Saugrüssel (3) zum Aufnehmen des Saugguts,
einem Sammelbehälter (2) für das aufgesaugte Sauggut, in den der Saugrüssel (3) mündet und in dem das Sauggut aus dem Saugluftstrom abgeschieden wird, einem an den Sammelbehälter (2) angeschlossenen Sauggebläse (4) und
einer zwischen der Mündung des Saugrüssels (3) in den Sammelbehälter (2) und dem Sauggebläse (4) angeordneten Filtervorrichtung (6), die ein Feinfilter (6b) umfaßt,
dadurch gekennzeichnet,
daß dem Feinfilter (6b) ein Grobfilter (6a) vorgeschaltet ist, der von einem labyrinthförmigen Strömungskanal (8, 9, 10) gebildet ist, in dem der Saugluftstrom mehrfach stark umgelenkt wird,
wobei der Strömungskanal (8, 9, 10) von zueinander versetzten Trennwänden (7a, 7b, 7c) begrenzt ist, die mit unterschiedlichem Abstand derart angeordnet sind, daß der Strömungsquerschnitt des Strömungskanals in Strömungsrichtung zunimmt.

2. Bagger nach Anspruch 1, dadurch gekennzeichnet, daß die Trennwände (7a, 7b, 7c) im wesentlichen vertikal sowie parallel zueinander angeordnet sind.

3. Bagger nach Anspruch 1 oder 2, dadurch gekennzeichnet, daß die Umlenkungen des Strömungskanals (8, 9, 10) abwechselnd nahe der oberen Wand (2a) bzw. nahe dem Boden (2b) des Sammelbehälters (2) erfolgen.

4. Bagger nach einem der Ansprüche 1 bis 3, dadurch gekennzeichnet, daß das Feinfilter (6b) von mehreren durchströmten Filtersäcken (16) gebildet ist.

5. Bagger nach Anspruch 4, dadurch gekennzeichnet, daß die Filtersäcke (16) im wesentlichen vertikal ausgerichtet und von unten nach oben durchströmt sind.

6. Bagger nach Anspruch 4 oder 5, dadurch gekennzeichnet, daß die Filtersäcke (16) an ihrem oberen Ende mit Luft- und/oder Wasserdüsen (17) versehen sind, mittels der die Filtersäcke (16) unter Druck ausblasbar bzw. ausspülbar sind.

7. Bagger nach einem der Ansprüche 4 bis 6, dadurch gekennzeichnet, daß die Filtersäcke (16) an einem schwimmend gelagerten Tragrahmen (15) angebracht sind.

8. Bagger nach Anspruch 7, dadurch gekennzeichnet, daß der Tragrahmen (15) mittels einer Vibrationsvorrichtung (18, 19) in Schwingung versetzbar ist.

9. Bagger nach einem der Ansprüche 1 bis 8, dadurch gekennzeichnet, daß am Boden (2b) des Sammelbehälters (2) eine Fördervorrichtung (23) angeordnet ist, mittels der das aus dem Luftstrom abgeschiedene Sauggut aus dem Sammelbehälter abführbar ist.

10. Bagger nach Anspruch 9, dadurch gekennzeichnet, daß die Fördervorrichtung eine Förderschnecke (23) ist.

11. Bagger nach Anspruch 10, dadurch gekennzeichnet, daß die Förderschnecke (23) im wesentlichen in Längsrichtung des Baggers verläuft.

12. Bagger nach Anspruch 10 oder 11, dadurch gekennzeichnet, daß dem förderseitigen Ende der Förderschnecke (23) eine Öffnung (24) im Boden (2b) des Sammelbehälters (2) zugeordnet ist, durch die das Sauggut auf eine darunterliegende Transportvorrichtung (26) fällt.

13. Bagger nach Anspruch 12, dadurch gekennzeichnet, daß die Öffnung (24) nahe dem hinteren Ende des Sammelbehälters (2) angeordnet ist.

14. Bagger nach Anspruch 12 oder 15, dadurch gekennzeichnet, daß die Transportvorrichtung ein erstes Förderband (26) umfaßt.

15. Bagger nach Anspruch 14, dadurch gekennzeichnet, daß am freien Ende des ersten Förderbandes (26) ein zweites Förderband (27) angeordnet ist, wobei das Saug- bzw. Fördergut von dem ersten Förderband (26) an das zweite Förderband (27) übergebbar ist.

16. Bagger nach Anspruch 15, dadurch gekennzeichnet, daß das zweite Förderband (27) schwenkbar an dem Chassis des Baggers (1) angebracht und/oder relativ zum Chassis verschiebbar ist.

17. Bagger nach einem der Ansprüche 1 bis 16, dadurch gekennzeichnet, daß der Filtervorrichtung (6) im Sammelbehälter (2) ein Absetzraum (2c) vorgeschaltet ist.

18. Bagger nach Anspruch 17, dadurch gekennzeichnet, daß der Absetzraum (2c) mittels einer Trennwand (28) in zwei Behälterabschnitte (31, 32) unterteilt ist und daß Strömungsleitvorrichtungen (30) vorgesehen sind, mittels der der durch die Mündung des Saugrüssels (3) in dem Sammelbehälter (2) eintretende Saugluftstrom wahlweise in einen der beiden Behälterabschnitte (31, 32) einleitbar ist.

19. Bagger nach Anspruch 18, dadurch gekennzeichnet, daß jeder Behälterabschnitt (31, 32) an seinem unteren Ende eine verschließbare Öffnung (34) aufweist, durch die das abgeschiedene Sauggut auf eine darunterliegende Transportvorrichtung (35) fällt.

20. Bagger nach Anspruch 19, dadurch gekennzeichnet, daß die Transportvorrichtung ein Förderband (35) ist.

21. Bagger nach Anspruch 20, dadurch gekennzeichnet, daß das Förderband (35) schwenkbar an dem Chassis des Baggers (1) angebracht und/oder relativ zum Chassis verschiebbar ist.

## Claims

1. Dredge for the planned taking up of suction material, particularly for digging out soil on underground lines having a pneumatic suction tube (3) for taking up the suction material, the storage tank (2) for the sucked up material, into which issues the suction tube (3) and in which the suction material is separated from the suction air flow, an exhaust fan (4) connected to the storage tank (2) and a filtering mechanism (6), incorporating a fine filter (6b), located between the opening of the suction tube (3) in the storage tank (2) and the exhaust fan (4), characterized in that upstream of the fine filter (6b) is positioned a coarse filter (6a) formed by a labyrinth-like flow channel (8, 9, 10), in which the suction air flow is strongly multiply deflected, in which the flow channel (8, 9, 10) is bounded by mutually offset partitions (7a, 7b, 7c), which are positioned with different spacings in such a way that the flow cross-section of the flow channel increases in the flow direction.

2. Dredge according to claim 1, characterized in that the partitions (7a, 7b, 7c) are arranged substantially vertically and parallel to one another.

3. Dredge according to claim 1 or 2, characterized in that the deflections of the flow channel (8, 9, 10) alternately occur close to the upper wall (2a) and close to the bottom (2b) of the storage tank (2).

4. Dredge according to one of the claims 1 to 3, characterized in that the fine filter (6b) is formed by several flowed-through filtering bags (16).

5. Dredge according to claim 4, characterized in that the filtering bags (16) are substantially vertically oriented and the flow therethrough is from bottom to top.

6. Dredge according to claim 4 or 5, characterized in that at the upper end the filtering bags (16) are provided with air and/or water nozzles (17) by means of which the filtering bag (16) can be blown or rinsed out under pressure.

7. Dredge according to one of the claims 4 to 6, characterized in that the filtering bags (16) are fitted to a support frame (15) mounted in floating manner.

8. Dredge according to claim 7, characterized in that the support frame (15) is vibrated by means of a vibrating mechanism (18, 19).

9. Dredge according to one of the claims 1 to 8, characterized in that on the bottom (2b) of the storage tank (2) is provided a conveying mechanism (23) by means of which the suction material separated from the air flow can be removed from the storage tank.

10. Dredge according to claim 9, characterized in that the conveying mechanism is a screw conveyor (23).

11. Dredge according to claim 10, characterized in that the screw conveyor (23) runs substantially in the longitudinal direction of the dredge.

12. Dredge according to claim 10 or 11, characterized in that with the feed-side end of the screw conveyor (23) is associated an opening (24) in the bottom (2b) of the storage tank (2) through which the suction material drops onto a transporting mechanism (26) located below the same.

13. Dredge according to claim 12, characterized in that the opening (24) is close to the rear end of the storage tank (2).

14. Dredge according to claim 12 or 15, characterized in that the transporting mechanism incorporates a first conveyor belt (26).

15. Dredge according to claim 14, characterized in that at the free end of the first conveyor belt (26) is located a second conveyor belt (27), the suction or feed material being transferable from the first conveyor belt (26) to the second conveyor belt (27).

16. Dredge according to claim 15, characterized in that the second conveyor belt (27) is fitted in pivotable manner to the chassis of the dredge (1) and/or is displaceable relative to the chassis.

17. Dredge according to one of the claims 1 to 16, characterized in that a settling chamber (2c) is positioned upstream of the filtering mechanism (6) in the storage tank (2).

18. Dredge according to claim 17, characterized in that the settling chamber (2c) is subdivided by a partition (28) into two tank portions (31, 32) and that flow guidance devices (30) are provided by means of which the suction air flow entering the storage tank (2) through the opening of the suction tube (3) can be passed into one or other of the two tank portions (31, 32).

19. Dredge according to claim 18, characterized in that at its lower end each tank portion (31, 32) has a sealable opening (34) through which the separated suction material drops onto an underlying transporting mechanism (34).

20. Dredge according to claim 19, characterized in that the transporting mechanism is a conveyor belt (35).

21. Dredge according to claim 20, characterized in that the conveyor belt (35) is pivotably fitted to the chassis of the dredge (1) and/or is displaceable relative to the chassis.

## Revendications

1. Drague pour emporter d'un endroit précis un matériau susceptible d'être aspiré, en particulier pour l'enlèvement de terre autour de conduites enterrées, comprenant :
. une trompe aspirante (3) pour emporter le matériau aspiré,
. un réservoir-collecteur (2) pour le matériau aspiré, dans lequel la trompe aspirante (3) débouche et dans lequel le matériau aspiré est séparé du flux aéraulique d'aspiration,
. une turbine d'aspiration (4) reliée au réservoir-collecteur (2), et
. un dispositif de filtrage (6) qui est disposé entre l'extrémité de la trompe aspirante (3) débouchant dans le réservoir-collecteur (2) et la turbine d'aspiration (4) et comportant un filtre fin (6b),
caractérisée en ce qu'en amont du filtre fin (6b) est placé un filtre grossier (6a) consistant en un canal d'écoulement (8,9,10) en forme de labyrinthe dans lequel le flux aéraulique d'aspiration est à plusieurs reprises fortement dévié, le canal d'écoulement (8,9,10) étant délimité par des cloisons de séparation (7a,7b,7c) décalées les unes par rapport aux autres et disposées à intervalles variables de façon telle que la section d'écoulement du canal d'écoulement augmente dans le sens de l'écoulement.

2. Drague selon la revendication 1, caractérisée en ce que les cloisons de séparation (7a,7b,7c) sont disposées sensiblement verticales et parallèles les unes aux autres.

3. Drague selon l'une quelconque des revendications 1 ou 2, caractérisée en ce que les déviations du canal d'écoulement (8,9,10) sont réalisées alternativement à proximité de la paroi supérieure (2a) et à proximité du fond (2b) du réservoir-collecteur (2).

4. Drague selon l'une quelconque des revendications 1 à 3, caractérisée en ce que le filtre fin (6b) est constitué de plusieurs sacs filtrants (16) traversés par le flux.

5. Drague selon la revendication 4, caractérisée en ce que les sacs filtrants (16) sont alignés de façon sensiblement verticale et sont traversés par le flux du bas vers le haut.

6. Drague selon l'une quelconque des revendications 4 ou 5, caractérisée en ce que les sacs filtrants (16) sont munis à leur extrémité supérieure de buses d'air ou d'eau (17), au moyen desquelles les sacs filtrants (16) peuvent être vidés par soufflage ou projection d'eau sous pression.

7. Drague selon l'une quelconque des revendications 4 à 6, caractérisée en ce que les sacs filtrants (16) sont fixés à un cadre porteur (15) monté flottant.

8. Drague selon la revendication 7, caractérisée en ce qu'on peut secouer le cadre porteur (15) au moyen d'un dispositif vibratoire (18,19).

9. Drague selon l'une quelconque des revendications 1 à 8, caractérisée en ce qu'un dispositif d'évacuation (23) est placé sur le fond (2b) du réservoir-collecteur (2), au moyen duquel le matériau aspiré séparé du flux aéraulique peut être évacué hors du réservoir-collecteur.

10. Drague selon la revendication 9, caractérisée en ce que le dispositif d'évacuation est une vis sans fin (23).

11. Drague selon la revendication 10, caractérisée en ce que la vis sans fin (23) s'étend sensiblement dans le sens longitudinal de la drague.

12. Drague selon l'une quelconque des revendications 10 ou 11, caractérisée en ce qu'une ouverture (24) dans le fond (2b) du réservoir-collecteur (2) est prévue à l'extrémité de sortie de la vis sans fin (23), ouverture à travers laquelle le matériau aspiré tombe sur un convoyeur inférieur (26).

13. Drague selon la revendication 12, caractérisée en ce que l'ouverture (24) est ménagée à proximité de l'extrémité arrière du réservoir-collecteur (2).

14. Drague selon la revendication 12 ou 13, caractérisée en ce que le convoyeur comporte une première bande transporteuse (26).

15. Drague selon la revendication 14, caractérisée en ce qu'une deuxième bande transporteuse (27) est disposée à l'extrémité libre de la première bande transporteuse (26), le matériau aspiré ou évacué pouvant être transféré de la première bande transporteuse (26) à la deuxième (27).

16. Drague selon la revendication 15, caractérisée en ce que la deuxième bande transporteuse (27) est montée pivotante sur le châssis de la drague (1) et/ou mobile par rapport à celui-ci.

17. Drague selon l'une quelconque des revendications 1 à 16, caractérisée en ce qu'un compartiment de tranquilisation (2c) est ménagé dans le réservoir-collecteur (2) en amont du dispositif de filtrage (6).

18. Drague selon la revendication 17, caractérisée en ce que le compartiment de tranquilisation (2c) est divisé par une cloison de séparation (28) en deux parties de réservoir (31,32) et en ce que sont prévus des dispositifs d'orientation du flux (30), au moyen desquels le flux aéraulique d'aspiration entrant par l'extrémité de la trompe aspirante (3) débouchant dans le réservoir-collecteur (2) est orienté au choix dans l'une des deux parties de réservoir (31,32).

19. Drague selon la revendication 18, caractérisée en ce que chaque partie de réservoir (31,32) présente à son extrémité inférieure une ouverture obturable (34), à travers laquelle le matériau aspiré séparé du flux aéraulique tombe sur un convoyeur inférieur (35).

20. Drague selon la revendication 19, caractérisée en ce que le convoyeur est une bande transporteuse (35).

21. Drague selon la revendication 20, caractérisée en ce que la bande transporteuse (35) est montée pivotante sur le châssis (1) de la drague et/ou mobile par rapport à celui-ci.
